Europäisches Patentamt

European Patent Office

Office européen des brevets

(11) Numéro de publication: **0 310 485**
**A1**

(12) **DEMANDE DE BREVET EUROPEEN**

(21) Numéro de dépôt: 88402417.5

(22) Date de dépôt: 26.09.88

(51) Int. Cl.⁴: **G 07 F 7/02**
**G 07 F 7/08**

(30) Priorité: 30.09.87 FR 8713500

(43) Date de publication de la demande:
05.04.89 Bulletin 89/14

(84) Etats contractants désignés:
BE CH DE ES GB IT LI NL SE

(71) Demandeur: SCHLUMBERGER INDUSTRIES
50, avenue Jean Jaurès
F-92120 Montrouge (FR)

(72) Inventeur: Barakai, Simon
3, Allée des Tilleuls
F-78570 Anrési (FR)

(74) Mandataire: Dronne, Guy
SCHLUMBERGER INDUSTRIES Groupe Transactions
Electroniques BP 620-04
F-92542 Montrouge Cédex (FR)

(54) Procédé d'enregistrement de soldes successifs dans une mémoire électronique et système pour la mise en oeuvre dudit procédé.

(57) Procédé pour écrire des soldes successifs ($S_n$) dans une mémoire non volatile.

La mémoire est divisée en deux zones ZD et ZC, les deux points-mémoire ayant la même adresse forment un couple. Pour écrire un nouveau solde on écrit un 1 pour faire passer le couple (1,0) à l'état (1,1) et on écrit un 1, couple (1,0) à une adresse telle que le nombre de couples (0,0) ayant des adresses supérieures soit égal au solde ($S_n$) à écrire.

Application aux cartes à mémoire électronique.

FIG.3

## Description

## PROCEDE D'ENREGISTREMENT DE SOLDES SUCCESSIFS DANS UNE MEMOIRE ELECTRONIQUE ET SYSTEME POUR LA MISE EN OEUVRE DUDIT PROCEDE

La présente invention a pour objet un procédé d'enregistrement de soldes successifs dans une mémoire électronique, notamment d'une carte, et un système pour la mise en oeuvre dudit procédé.

Il existe de plus en plus de systèmes qui utilisent des cartes à mémoire électronique, notamment des systèmes de paiement électronique pour la fourniture de prestations qu'il s'agisse de l'établissement d'une communication téléphonique, de la délivrance de billets de banque, de la fourniture d'objets, de l'acquittement de taxes de stationnement etc...

La carte à mémoire comporte, outre des circuits de traitement plus ou moins élaborés, une mémoire qui est actuellement non volatile. Cette mémoire peut être du type EEPROM ou du type EPROM. Dans le cas d'une mémoire EEPROM, c'est à dire d'une mémoire non volatile effaçable électriquement, la mémorisation des soldes successifs ne soulève guère de problème puisqu'on efface le solde précédent pour écrire le nouveau solde.

Dans le cas d'une mémoire EPROM, les informations mémorisées ne peuvent être effacées que globalement par un rayonnement ultra violet. Cela signifie concrètement que dans une carte munie d'une mémoire EPROM l'inscription d'une donnée est irréversible. Plus précisément chaque point mémoire initialement à l'état "O" passe de façon irréversible à l'état "1" lorsqu'il a été écrit.

De ce qui précède on déduit aisément qu'avec une mémoire du type EPROM il est particulièrement intéressant de prévoir une procédure d'écriture des soldes successifs qui consomme un nombre de points mémoire aussi réduit que possible.

Il faut en outre souligner que la carte doit pouvoir être rechargeable c'est à dire que non seulement elle doit permettre l'enregistrement de soldes correspondant à des débits mais également l'enregistrement de soldes correspondant à un rechargement de la carte c'est à dire à des crédits.

La demande de brevet français 2.591.007 décrit une procédure d'écriture dans une mémoire EPROM, procédure dite "porte-jeton" qui vise à résoudre ce problème. Cependant la technique décrite dans ce document est complexe et ne permet pas une utilisation optimale de la capacité de mémoire.

Pour remédier à cet inconvénient, un objet de l'invention est de fournir un procédé d'enregistrement de soldes successifs dans une mémoire qui soit d'une mise en oeuvre simple et qui assure une utilisation optimale de la capacité de la mémoire.

Pour atteindre ce but, selon l'invention, le procédé d'enregistrement de soldes successifs dans une mémoire électronique constituée par une pluralité de points mémoire présentant un état initial (0) et une état "écrit" final (1), ladite mémoire comportant au moins une région de mémoire partagée en deux zones de mémoire, chacune des deux zones comprenant un même nombre de points mémoire, chaque point mémoire occupant un rang selon une relation d'ordre définie dans la zone de mémoire à laquelle il appartient, les deux points-mémoire de rang correspondant formant un couple de points mémoire également repéré par rapport aux autres couples par un rang, se caractérise

en ce que, avant chaque étape d'enregistrement, ladite région comprend un couple unique de référence ($CR_{n-1}$) dont les deux points mémoire ont des états différents, les autres couples étant constitués par deux points mémoire présentant l'état initial (C (0,0)) ou deux points mémoire ayant l'état final (C (1,1)) ; et

en ce que, pour écrire un nouveau solde ($Sn$) correspondant à un nombre p d'unités, si cela est possible, on fait passer à l'état final (1) le point mémoire du couple de référence ($CR_{n-1}$) qui était à l'état inital (0) et on inscrit un nouveau couple de référence ($CR_n$) à un rang tel que le nombre ($NT_n$) de couples de points à l'état initial (C (0,0)) ayant un rang supérieur au rang dudit couple de référence ($CR_n$) soit égal à p.

On comprend qu'ainsi l'enregistrement d'un nouveau solde correspondant à un débit ou à un crédit se fait toujours de la même manière en écrivant un "1" au rang du couple de référence précédent et en écrivant un "1" au rang du nouveau couple de référence.

De préférence on définit dans ladite mémoire m régions de mémoire, en ce que chaque unité correspondant à un point mémoire d'une région à une valeur spécifique, en ce que le nouveau solde à écrire ($S_n$) est transcrit en m soldes partiels ($S_n^i$) correspondant aux différentes régions, chaque solde partiel ($S_n^i$) étant associé à la région correspondante, et en ce qu'on écrit dans chaque région le solde partiel correspondant.

Par exemple si le solde maximal est de 1000,00 F une première région de mémoire prendra en compte les centaines de francs (valeurs comprise entre 0 et 9) une deuxième région de mémoire prendra en compte les dizaines et les unités de francs (valeurs comprises entre 0 et 99) et une troisième région de mémoire prendra en compte les centimes et dizaines de centimes (valeurs comprises entre 0 et 99). Ainsi dans la première région de mémoire l'unité vaudra 100 F, dans la deuxième région elle vaudra 1 F, et dans la troisième 1 centime.

D'autres caractéristiques de l'invention apparaîtront plus clairement à la lecture de la description qui suit de plusieurs modes de réalisation de l'invention donnés à titre d'exemples non limitatifs. La description se réfère au dessin annexé sur lequel :

Les figures 1a à 1d sont des schémas montrant l'organisation d'une région de mémoire ;

La figure 2 est un schéma montrant l'organisation de l'ensemble d'une mémoire comportant 3 régions de mémoire ;

La figure 3 est un organigramme décrivant l'enregistrement d'un débit dans une région de mémoire,

La figure 4 est un organigramme décrivant l'enregistrement d'un crédit dans une région de mémoire ;

La figure 5 montre l'organisation du circuit intégré d'une carte à mémoire électronique pour la mise en oeuvre de procédé d'enregistrement selon l'invention ; et

La figure 6 montre une machine de fourniture de prestations à l'aide de cartes à mémoire mettant en oeuvre le procédé selon l'invention.

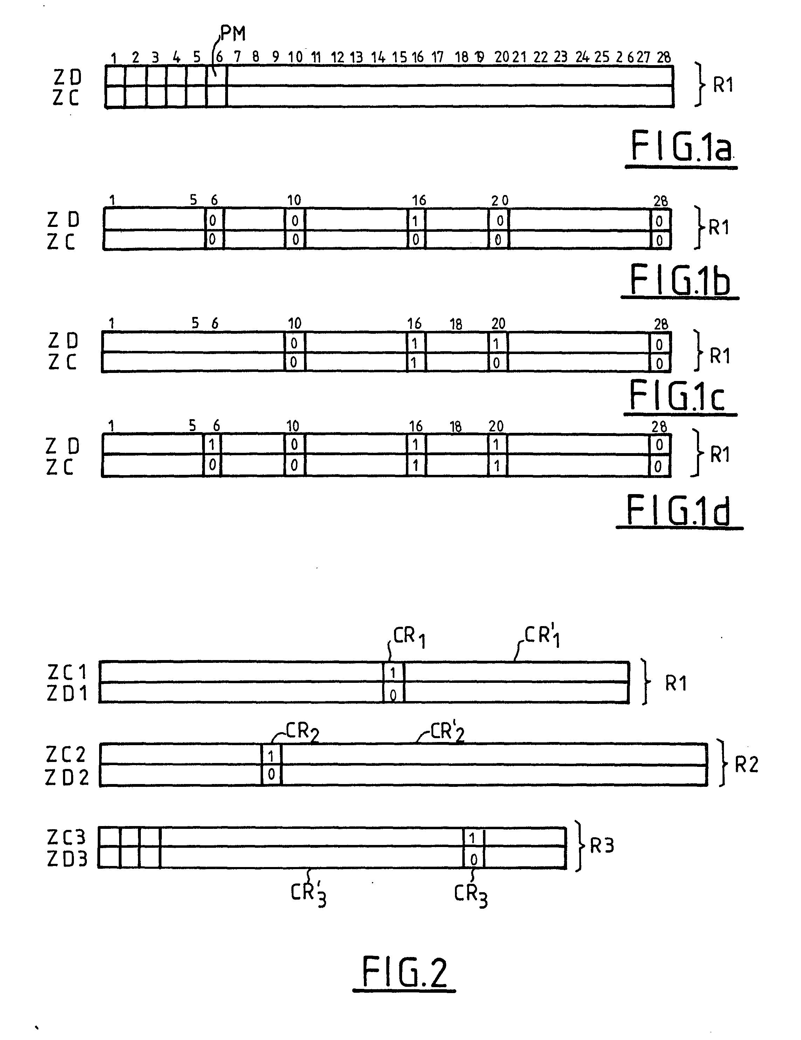

En se référant tout d'abord aux figures 1, 3 et 4, on va décrire le principe du procédé d'enregistrement selon la présente invention.

La figure 1 montre l'organisation de la mémoire dans le cas où celle-ci ne comporte qu'une région $R_1$. La région $R_1$ est divisée en deux zones de mémoire comportant chacune le même nombre de points mémoire PM. La première zone ZD est dite "zone de comptage" et la deuxième zone ZC est dite "zone de contrôle". Dans l'exemple considéré chaque zone mémoire comporte 28 points mémoire PM.

Pour chaque point mémoire PM de la zone ZD et de la zone ZC on définit un rang (i) par une relation d'ordre sur les différents points mémoire d'une même zone ZD ou ZC. Pour simplifier l'exposé, dans l'exemple décrit, le rang i d'un point mémoire PM est confondu avec son adresse physique. Cette adresse va en croissant de la gauche vers la droite. Un couple de points mémoire ou, en abrégé, un couple est constitué par un point de la zone ZD et par le point mémoire de la zone ZC ayant le même rang.

Comme on l'a indiqué précédemment les points mémoire ont un état initial vierge, qu'on appellera "O" et un état final "1" qui apparait lorsqu'on a appliqué au point mémoire correspondant la tension ad hoc pour écrire. On pourra donc définir un couple par son rang i et par l'état du point du couple appartenant à la zone ZD et l'état du point appartenant à la zone ZC. Par exemple $C (0,1)_5$ désigne le couple de rang 5 et dans lequel le point de la zone ZD est à l'état initial et le point de la zone ZC à l'état final ou "inscrit". Chaque point mémoire de la zone ZD représente une unité, par exemple 10 F.

Initialement tous les points mémoire sont à "0". Le solde disponible est alors égal au nombre total de points mémoire de ZD, c'est à dire 28 unités dans l'exemple considéré, soit 280 F.

On suppose que, après une opération effectuée à l'aide de la carte, le nouveau solde à inscrire dans la région R1 de la mémoire soit 12 unités. Pour cela on inscrit un "1" dans le point mémoire de la zone ZD dont le rang est tel qu'il ait 12 couples dont le rang lui soit supérieur, ces 12 couples ayant leur deux points mémoire à "0". Le "1" sera donc inscrit dans le point mémoire de rang 16 de la zone ZD. Comme le montre la figure 1b tous les couples sont de la forme $C (0,0)$ sauf le couple de rang 16 qui est $C (1,0)_{16}$ de la zone ZC, ce couple devenant $C (1,1)_{16}$, et on inscrit un "1" dans le point mémoire de la zone ZD dont le rang est tel qu'il existe 8 couples $C (0,0)$ dont les rangs lui sont supérieurs. Compte tenu des conventions adoptées cela signifie qu'il doit rester 8 couples $C (0,0)$ à la droite du couple où l'on doit inscrire un "1". Ce couple a donc comme rang 20 et il s'écrira $C (1,0)_{20}$. C'est ce qui est montré sur la figure 1C.

On suppose maintenant que le nouveau solde soit égal à 20 unités ce qui correspond à l'entrée d'un crédit. Comme précédemment on inscrit un "1" dans le point mémoire de la zone ZC du couple $C (1,0)_{20}$ qui devient $C (1,1)_{20}$ et on inscrit un "1" dans le point mémoire de la zone ZD dont le rang est tel qu'il reste à sa droite 20 couples de la forme $C (0,0)$. Du fait qu'il existe déjà les couples $C (1,1)_{16}$ et $C (1,1)_{20}$, le rang est égal à 6. C'est ce qui est représenté sur la figure 1d.

Après cet exemple particulier de mise en oeuvre du procédé d'enregistrement de l'invention, on va définir le procédé dans sa généralité.

La région de mémoire $R_1$ est divisée en deux zone ZD et ZC comportant chacune le même nombre $n$ de points mémoire PM. On définit une relation d'ordre dans chaque zone pour affecter à chaque point mémoire un rang (i). On définit une relation biunivoque entre les rangs des points mémoire des deux zones. On définit ainsi n couples de points mémoire. Chaque couple est formé par un point mémoire de la zone ZD et le point mémoire de ZC dont le rang lui correspond dans la relation bi-univoque. Comme les deux points n'ont pas nécessairement le même rang, le rang i d'un couple $C (x,y)_i$ est le rang de son point mémoire de la zone ZD. On pourrait bien sûr utiliser la convention inverse. Avant une phase d'écriture d'un nouveau solde (Sn) la mémoire comporte un unique couple de la forme $C (1,0)_i$ et des couples de la forme $C (0,0)$ et de la forme $C (1,1)$. On appellera couple de référence CR le couple de la forme $C (1,0)_i$. Le nombre de couples de la forme $C (0,0)$ de rang supérieur au rang du couple de référence $CR_{n-1}$ donne le solde disponible. $S_{n-1}$. Pour écrire un nouveau solde $S_n$ correspondant à q unités, on écrit un "1" pour faire passer le couple de référence précédent $CR_{n-1}$ de la forme $C (1,0)$ à la forme $C (1,1)$. Ce couple n'est donc plus un couple de référence. On inscrit un "1" au point mémoire de la zone ZD dont le rang est tel qu'il existe un nombre q de couples $C (0,0)$ dont le rang est supérieur au rang de ce point.

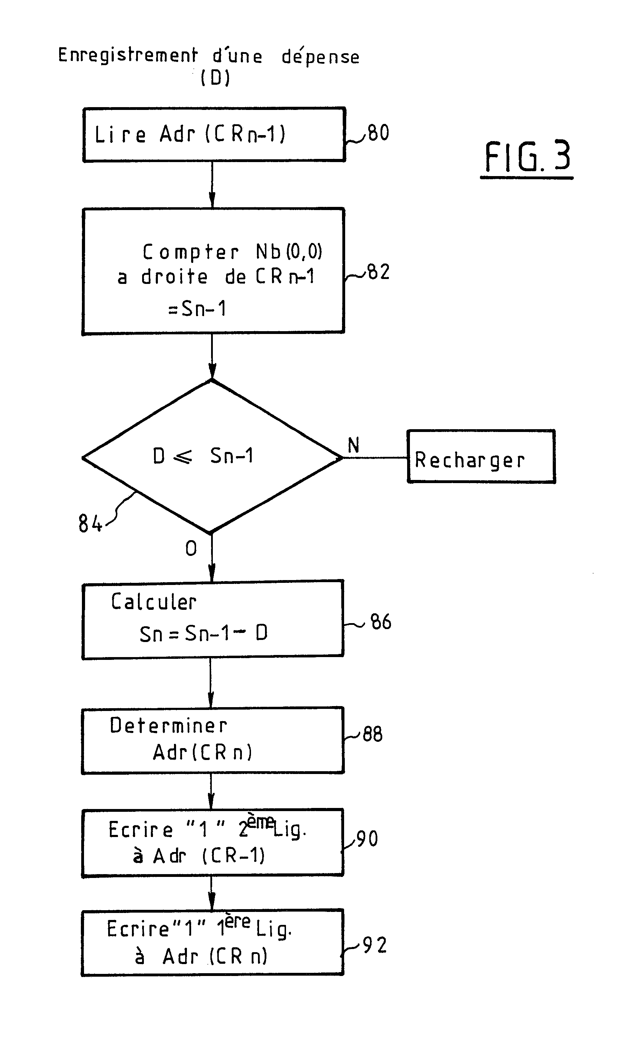

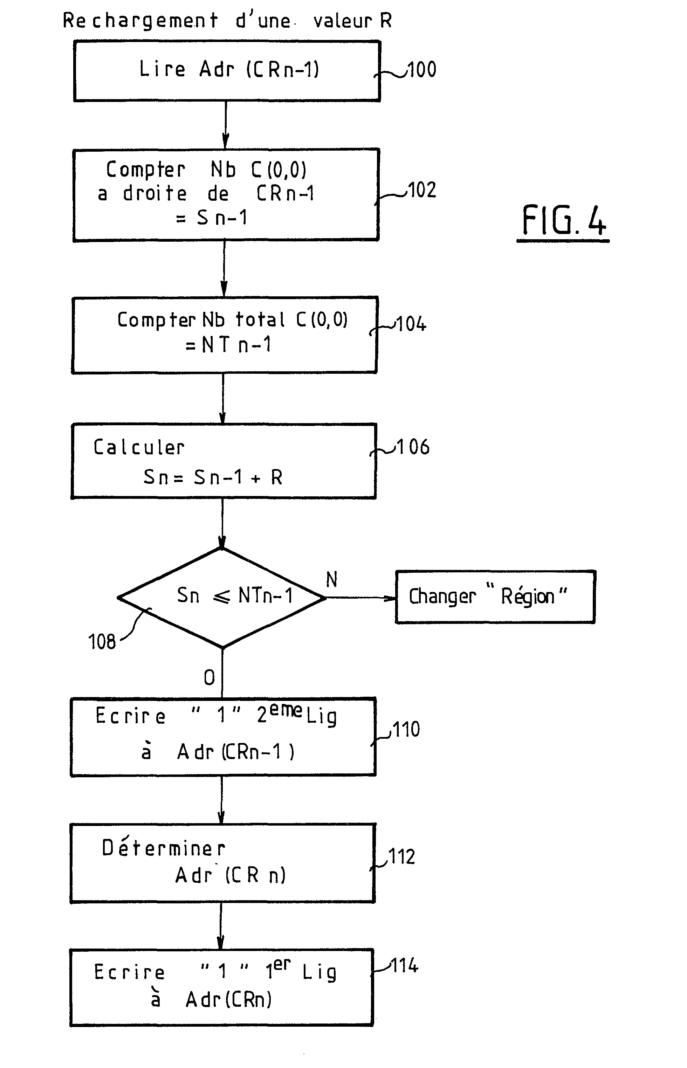

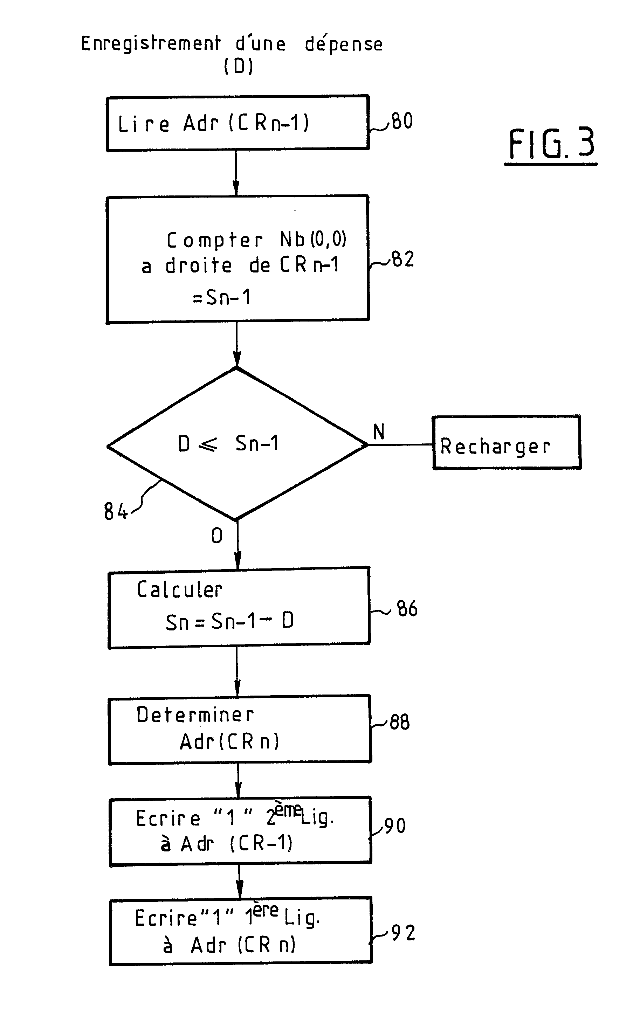

On comprend que le problème concret n'est pas d'écrire des soldes successifs mais d'écrire le nouveau solde $S_n$ après une opération de débit D ou de crédit R. Cette opération complète sera décrite en détails en liaison avec les figures 3, 4 et 6. On peut cependant déjà indiqué que la valeur de l'ancien solde $S_{n-1}$ peut être déterminée à partir du couple de référence $CR_{n-1}$ puisqu'il est égal au nombre de couples $C (0,0)$ à droite du couple $CR_{n-1}$. Le nouveau solde $S_n$ est égal à $S_{n-1} - D$ ou $S_{n-1} + R$ selon qu'il s'agit d'un débit ou d'un crédit. Bien entendu, dans le cas d'un débit, il faut que le nouveau solde soit positif et dans le cas d'un crédit il faut que le nouveau solde ne soit pas supérieur au nombre total de couples de la forme $C (0,0)$.

Dans le mode de mise en oeuvre décrit précédemment les soldes successifs sont écrits en les exprimant à l'aide d'une unité de base qui correspond à un point mémoire. Une telle solution n'est utilisable que si les soldes exprimés à l'aide de l'unité de base n'ont pas des valeurs trop importantes, sinon la capactié de mémoire devrait être trop importante.

La figure 2 illustre un mode perfectionné de réalisation de l'invention. L'ensemble de la mémoire EPROM est divisé en plusieurs régions, par exemple trois région $R_1$, $R_2$ et $R_3$. Chaque région comporte une zone de comptage $ZD_1$, $ZD_2$, $ZD_3$ et une zone de contrôle $ZC_1$, $ZC_2$, $ZC_3$. Chaque région $R_1$, $R_2$, $R_3$ a donc la même structure que la région de la figure 1. Cependant chaque région peut comporter un nombre de points mémoire différent. Chaque région est associée à une unité particulière, c'est à dire que dans une région donnée tous les points mémoire représentent la même valeur, mais que d'une région à une autre, les points mémoire représentent des valeurs différentes. Par exemple la carte doit pouvoir enregistrer des soldes dont le montant est compris entre 1000 F et 0 F. La première région $R_1$ sert à enregistrer les centaines de francs, $R_2$ sert à enregistrer les dizaines de francs et $R_3$ les unités de francs.

Un solde est donc obtenu en combinant les soldes partiels correspondant aux trois régions. Dans chaque région le solde partiel est défini comme cela a été décrit en liaison avec la figure 1. Plus précisément chaque région comporte un couple de référence $CR_1$, $CR_2$, $CR_3$. Le solde partiel $S_1$ est égal au nombre de couples C (0,0) à droite de $CR_1$, exprimé en centaines de francs. Les soldes partiels dans $R_2$ et $R_3$ se déterminent de la même manière à partir des couples de référence $CR_2$ et $CR_3$.

A l'inverse, pour écrire un nouveau solde, on détermine chaque solde partiel $S'_1$, $S'_2$ et $S'_3$. On écrit un 1 dans chaque région pour faire passer à l'état C (0,0) les anciens couples de référence $CR_1$, $CR_2$ et $CR_3$, et on écrit de nouveaux couples de références $CR'_1$, $CR'_2$ et $CR'_3$ dans les régions $R_1$, $R_2$ et $R_3$ selon le procédé decrit précédemment.

Il faut remarquer que dans ce cas, l'écriture d'un nouveau solde global supérieur à l'ancien solde global, ce qui correspond à une opération de crédit, peut se traduire pour un ou deux soldes partiels par une diminution du solde partiel et que symétriquement dans le cas de l'écriture d'un débit, un ou deux soldes partiels peuvent augmenter.

En se référant maintenant aux figures 3 à 6 on va décrire un système de fourniture de prestations utilisant des cartes à mémoire dans lesquelles l'enregistrement des soldes est effectué selon le procédé de l'invention.

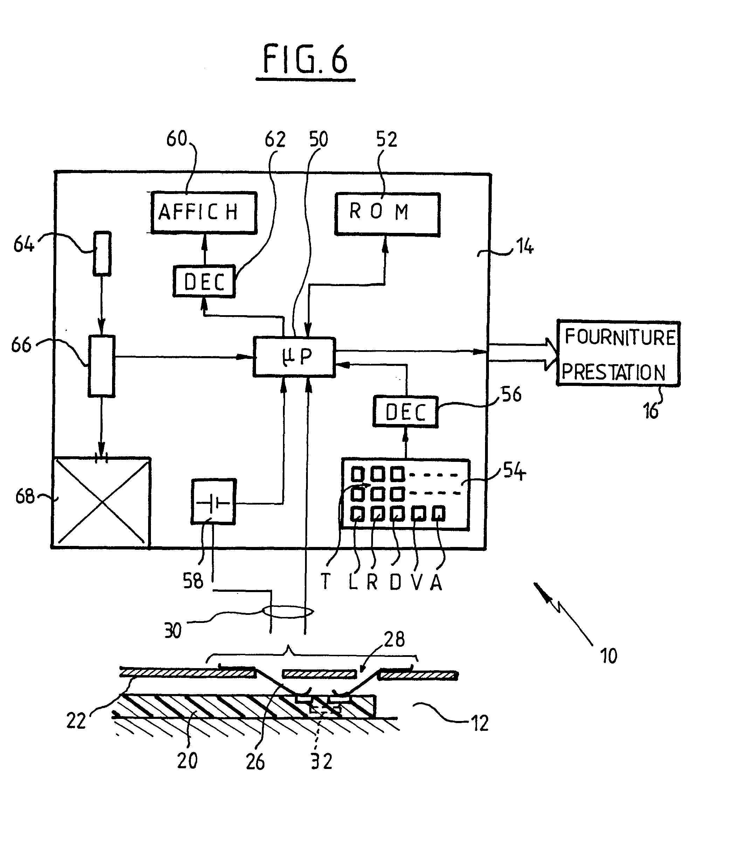

La figure 6 montre une machine de fourniture de prestations 10 qui comporte essentiellement un lecteur de cartes 12, un dispositif de traitement 14 et un dispositif de fourniture de prestations 16, par exemple un distributeur de tickets. Les usagers désirant obtenir des tickets disposent d'une carte à mémoire 20 qui peut être introduite dans le couloir de guidage 22 du lecteur de cartes 12. Lorsque la carte 20 est en position de lecture, des plages externes de contact 24 de la carte sont en contact électrique avec les lames conductrices 26 du connecteur 28 du lecteur de cartes. Les lames 26 sont reliées par des liaisons conductrices 30 au dispositif de traitement 14. Dans le corps de la carte 20, les plages externes de contact sont reliées au circuit intégré 32 implanté dans la carte.

La figure 5 montre une architecture possible du circuit intégré 32 de la carte 20. Le circuit comprend essentiellement une unité centrale de traitement 40, une unité arithmétique et logique 42, une mémoire de travail 44 du type RAM, une mémoire de programme 46, par exemple du type ROM et une mémoire de données 48 du type EPROM. C'est la mémoire 48 qui sert à stocker les soldes successifs et qui a l'organisation décrite en liaison avec les figures 1 et 2. Afin de simplifier la description qui va suivre, on considérera que la mémoire 48 ne comporte qu'une seule région de points mémoire $R_1$ (fig.1).

Si l'on revient à la figure 6, on voit que le dispositif de traitement 14 comprend un microprocesseur 50 qui est relié par les conducteurs 30 au connecteur 28. Le microprocesseur 50 est associé à une mémoire de programme 52 du type ROM ou EPROM. Le dispositif 14 comprend également un clavier 54 accessible à l'utilisateur comprenant des touches alpha-numériques T et des touches particulières référencées L, R, D, V et A. Leurs fonctions seront explicitées ultérieurement. Le clavier 54 est relié au microprocesseur 50 via un décodeur 56. Le dispositif 14 comprend également une source d'alimentation électrique 58 contrôlée par le microprocesseur 50 et qui sert notamment à alimenter le circuit 32 de la carte 20 lorsque celle-ci est en position de traitement, et un afficheur 60, par exemple à cristaux liquides, contrôlé par le microprocesseur 50 via un décodeur 62. Le dispositif 14 comprend enfin un circuit de traitement de pièces de monnaie comprenant une fente d'introduction de pièces 64 un sélecteur de pièces 66 et un réceptable 68 de stockage des pièces acceptées. Le sélecteur de pièces 66 sert d'une part à restituer les pièces non acceptées et d'autre part à envoyer au microprocesseur 50 des informations sur le montant total des pièces introduites dans la fente 64 et qui sont acceptées.

On va maintenant décrire l'utilisation par un usager de sa carte pour obtenir la fourniture de prestations à l'aide de la machine 10, c'est à dire la délivrance d'un ticket.

L'usager introduit sa carte dans le lecteur 12. A l'aide du clavier 54 il entre dans le dispositif 14 son numéro confidentiel. Celui-ci est transmis au circuit 32 de la carte qui compare le numéro confidentiel introduit à celui qui est mémorisé dans la carte. Ce processus est parfaitement connu et il est donc inutile de le décrire plus en détails.

Ensuite le détenteur de la carte appuie sur une des touches L, R ou D selon qu'il veut simplement connaître le solde encore disponible dans sa carte, ou bien recharger sa carte d'un certain montant ou encore obtenir la délivrance d'un ticket.

On suppose tout d'abord qu'il veut obtenir un ticket d'une valeur égale à 15 F. Il appuie donc sur la touche D et introduit le prix du ticket à l'aide des touches T. Le microprocesseur 50 transmet, via le connecteur 28, ces informations au circuit 32 de la carte 20. La réception du signal D' initialise le déroulement du programme DEPENSE stocké dans la ROM.

La figure 3 donne l'organigramme de ce programme. Dans une première étape 80, l'unité de traitement 40 commande la lecture de l'adresse Adr $(CR_{n-1})$ du couple de référence actuel, ainsi que le nombre de couples C (0,0) dont le rang est supérieur à celui de $CR_{n-1}$. L'unité arithmétique et logique 42 du circuit de la carte décompte le nombre de couples C (0,0) et ce nombre qui correspond à l'ancien solde $S_{n-1}$ est mémorisé temporairement dans la RAM de travail 44 (étape 82). Puis la CPU40 commande la comparaison entre le solde $S_{n-1}$ et le montant D de la prestation que veut obtenir l'usager, dans l'exemple décrit 15 unités (étape 84). Si D est supérieure au solde $S_{n-1}$, le circuit 30 de la carte émet vers le dispositif de traitement 14, un signal d'erreur. Le microprocesseur 50 commande l'affichage par le dispositif d'affichage 60 d'un message indiquant à l'usager qu'il ne peut obtenir la prestation et qu'il doit recharger sa carte. Au contraire, si D est inférieure à $S_{n-1}$ l'afficheur 60 indique que l'opération est possible. L'utilisateur a alors la possibilité d'annuler l'opération en appuyant sur la touche A, ou de confirmer l'opération en appuyant sur la touche V. Dans ce dernier cas la CPU 40 et l'ALU 42 commandent le calcul du nouveau solde $S_n$ (étape 86).

Ensuite le nouveau solde $S_n$ doit être écrit dans la mémoire 48 de la manière déjà décrite, c'est à dire que le circuit détermine l'adresse du nouveau couple de référence $CR_n$. Il écrit un 1 dans la zone ZC à l'adresse de l'ancien couple de référence $CR_{n-1}$ (étape 90) et il écrit un 1 dans la zone ZD à l'adresse du nouveau à l'adresse du nouveau couple de référence $CR_n$.

On va maintenant décrire le fonctionnement du système lorsque l'usager veut recharger sa carte pour un montant donné R.

Il introduit sa carte dans le passage d'introduction 22 du lecteur 12. Il entre son numéro confidentiel à l'aide du clavier 54, et il appuie sur la touche R correspondant à un rechargement de la carte. Il introduit alors dans la fente 64 des pièces pour un montant correspondant à R. Le sélecteur 66 envoie au microprocesseur 50 des signaux donnant le montant introduit à l'aide des pièces c'est à dire R. Ces informations sont transmises au circuit 32 de la carte via les connexions 30 et le connecteur 28. A la réception de ces informations un autre programme RECHARGE stocké dans la mémoire ROM 46 est initialisé. La figure 4 montre l'organigramme du programme RECHARGE.

A l'étape 100 l'unité de traitement 40 lit l'adresse du couple de référence $CR_{n-1}$. Puis, à l'étape 102, il lit le nombre de couples C (0,0) dont les rangs sont supérieurs à celui du couple de référence. On obtient ainsi l'ancien solde $S_{n-1}$ qui est stocké temporairement dans la mémoire 44. A l'étape 104, l'ALU 42 et la CPU40 calculent le nombre total $NT_{n-1}$ de couples dans la mémoire 48 qui sont à l'état C (0,0). Durant l'étape suivante 106 l'ALU 42 calcule le nouveau solde $S_n$ à partir de l'ancien solde $S_{n-1}$ qui est dans la mémoire 44. A l'étape 108, le nouveau solde $S_n$ est comparé au nombre $NT_{n-1}$. Si $NT_{n-1}$ est supérieur ou égal à $S_n$ le rechargement est possible. Le microprocesseur 50 commande l'affichage par l'afficheur 60 d'un message indiquant que l'opération est acceptée. L'usager a alors la possibilité de renoncer à cette opération en appuyant sur la touche A ou de la confirmer en appuyant sur la touche V. Dans ce cas les pièces de monnaie sont envoyées vers le réceptacle de stockage 68 et l'étape 110 du programme RECHARGE est effectuée. L'unité de traitement 40 commande l'écriture d'un "1" dans la zone de mémoire ZC à l'adresse du couple de référence $CR_{n-1}$. A l'étape 112 l'ALU 42 et la CPU 40 déterminent l'adresse du nouveau couple de référence $CR_n$. Puis à l'étape 114 on écrit un "1" à l'adresse du nouveau couple de référence $CR_n$ dans la zone ZD.

L'usager peut alors retirer sa carte qui comporte le nouveau solde $S_n$

Si lors de l'étape 108 il s'avère que le nombre de couples C (0,0) est insuffisant pour recharger la carte d'un montant R, le microprocesseur 50 commande l'afficheur 60 pour que celui-ci indique le rechargement maximal possible R'. Si l'usager accepte ce montant il appuie sur la touche V et le programme continue à se dérouler avec la valeur de rechargement R'. Si l'usager n'accepte pas, il appuie sur la touche A et les pièces qu'il a déjà introduites lui sont restituées.

Dans la description précédente, la mémoire 48 de la carte a une architecture qui correspond à la figure 1, c'est à dire que la mémoire ne comporte qu'une seule région. Le système décrit précédemment pourrait tout aussi bien fonctionner avec des cartes dont la mémoire comporte plusieurs régions correspondant à des valeurs d'unités différentes. Dans ce cas la mémoire ROM 46 de la carte doit comporter en plus des éléments de programme permettant de déterminer le solde total $S_n$ à partir des soldes partiels, et de déterminer les soldes partiels à partir du solde total $S_n$.

De même dans la description précédente ,c'est dans la carte 20 que sont chargés les programmes DEPENSE et RECHARGE, et c'est l'unité de traitement de la carte qui met en oeuvre ces programmes. On ne sortirait pas de l'invention si les programmes DEPENSE et RECHARGE étaient stockés dans le microprocesseur 50 du dispositif de traitement 14 et si c'était ce même microprocesseur 50 qui mettait en oeuvre ces programmes. Selon ce mode de réalisation, le circuit intégré de la carte ne comporterait plus que la mémoire EPROM 48 et ses circuits associés d'entrée/sortie et de lecture/écriture.

Selon encore un autre mode de réalisation, la machine 14 ne comporte pas le circuit de pièces 64, 66, 68. C'est à dire que la machine 10 de fourniture de prestations ne permet pas le rechargement de la carte. Lorsque l'usager veut faire recharger sa carte il doit s'adresser à l'organisme qui gère la fourniture des prestations. Il va cependant de soi que le procédé pour écrire dans la mémoire de la carte le nouveau solde après rechargement est exactement le même que celui qui a été décrit précédemment.

On comprend que, grâce au procédé selon l'invention, l'écriture d'un nouveau solde ne consomme qu'un couple de points-mémoire. En outre le contenu de la mémoire se présente exactement de la même manière après l'écriture d'un débit qu'après l'écriture d'un crédit. Il en résulte que la capacité mémoire de la carte peut être utilisée de façon optimale.

## Revendications

1. Procédé d'enregistrement de soldes successifs dans une mémoire électronique constituée par une pluralité de points mémoire présentant un état initial (0) et une état "écrit" final (1), ladite mémoire comportant au moins une région de mémoire partagée en deux zones de mémoire, chacune des deux zones comprenant un même nombre de points mémoire, chaque point mémoire occupant un rang selon une relation d'ordre définie dans la zone de mémoire à laquelle il appartient, les deux points-mémoire de rang correspondant formant un couple de points mémoire également repéré par rapport aux autres couples par un rang, caractérisé en ce que, avant chaque étape d'enregistrement, ladite région comprend un couple unique de référence ($CR_{n1}$) dont les deux points mémoire ont des états différents, les autres couples étant constitués par deux points mémoire présentant l'état initial (C (0,0)) ou deux points mémoire ayant l'état final (C (1,1)) ; et
en ce que, pour écrire un nouveau solde ($S_n$) correspondant à un nombre p d'unités, si cela est possible, on fait passer à l'état final (1) le point mémoire du couple de référence ($CR_{n-1}$) qui était à l'état inital (0) et on inscrit un nouveau couple de référence ($CR_n$) à un rang tel que le nombre ($NT_n$) de couples de points à l'état initial (C (0,0)) ayant un rang supérieur au rang dudit couple de référence ($CR_n$) soit égal à p.

2. Procédé selon la revendication 1, caractérisé en ce que, pour écrire un nouveau solde ($S_n$), on détecte le nombre (q) de couples dont les deux points mémoire sont à l'état initial (C (0,0)) et qui ont un rang supérieur au rang du couple actuel de référence ($CR_{n-1}$), ce qui donne le solde actuel ($S_{n-1}$) et on ajoute, si cela est possible, au nombre q la variation de solde (D ou R) pour obtenir ledit nouveau solde ($S_n$).

3. Procédé selon l'une quelconque des revendications 1 et 2, caractérisé en ce qu'on définit dans ladite mémoire m régions de mémoire, en ce que chaque unité correspond à un point mémoire d'une région à une valeur spécifique, en ce que le nouveau solde à écrire ($S_n$) est transcrit en m soldes partiels ($S_n^i$) correspondant aux différentes régions, chaque solde partiel ($S_n^i$) étant associé à la région correspondante, et en ce qu'on écrit dans chaque région de solde correspondant.

4. Procédé selon la revendication 3, caractérisé en ce que chaque valeur d'unité correspond à une puissance de 10 ou à un groupe de puissances de 10.

5. Système d'enregistrement de soldes successifs dans la mémoire électronique de dispositifs portatifs comprenant une pluralité de dispositifs portatifs, chaque dispositif portatif comportant des plages de contact électrique externes et un circuit intégré relié auxdites plages, ledit circuit intégré comprenant une mémoire programmable non volatile et non électriquement effaçable, ladite mémoire comportant au moins une région de mémoire partagée en deux zones de mémoire, chacune des deux zones comprenant un même nombre de points mémoire, chaque point mémoire occupant un rang selon une relation d'ordre définie dans la zone de mémoire à laquelle il appartient, les deux points-mémoire de rang correspondant formant un couple de points mémoire également repéré par rapport aux autres couples par un rang, et au moins une machine de traitement comportant des circuits de traitement, des moyens pour introduire dans lesdits circuits de la machine des instructions de modification de solde et des moyens pour relier lesdits circuits de traitement aux plages desdits dispositifs portatifs lorsque ceux-ci sont en position de traitement, caractérisé :
en ce que, avant chaque étape d'enregistrement, ladite région comprend un couple unique de référence ($CR_{n1}$) dont les deux points mémoire ont des états différents, les autres couples étant constitués par deux points mémoire présentant l'état initial (C (0,0)) ou deux points mémoire ayant l'état final (C (1,1)) ; et
en ce que, pour écrire un nouveau solde ($S_n$) correspondant à un nombre p d'unités, si cela est possible, ledit système comprend en outre des moyens d'écriture pour faire passer à l'état final (1) le point mémoire du couple de référence ($CR_{n-1}$) qui était à l'état inital (0) et pour inscrire un nouveau couple de référence ($CR_n$) à un rang tel que le nombre ($NT_n$) de couples de points à l'état initial (C (0,0)) ayant un rang supérieur au rang dudit couple de référence ($CR_n$) soit égal à p.

6. Système d'enregistrement selon la revendication 5, caractérisé en ce que, pour déterminer un nouveau solde ($S_n$) ledit système comprend des moyens pour détecter le nombre (q) de couples dont les deux points mémoire sont à l'état initial (C (0,0)) et qui ont un rang supérieur au rang du couple actuel de référence ($CR_{n-1}$), ce qui donne le solde actuel ($S_{n-1}$) et des moyens de calcul pour ajouter au nombre q, si cela est possible, la valeur des instructions de modification de solde introduites dans ladite machine de traitement ce qui donne la nouveau solde ($S_n$).

7. Système d'enregistrement selon la revendication 6, caractérisé en ce que lesdits moyens d'écriture sont situés dans ledit circuit intégré du dispositif portatif.

8. Système selon l'une quelconque des revendications 6 et 7, caractérisé en ce que lesdits moyens de calcul sont disposés dans le circuit intégré de ladite carte.

7

FIG.1a

FIG.1b

FIG.1c

FIG.1d

FIG.2

Enregistrement d'une dépense
(D)

## FIG.3

```
┌─────────────────────────┐
│  Lire Adr (CRn-1)       │ ～80
└─────────────────────────┘
            │
            ▼
┌─────────────────────────┐
│    Compter  Nb(0,0)     │
│   a droite de CRn-1     │ ～82
│        =Sn-1            │
└─────────────────────────┘
            │
            ▼
         ╱╲
        ╱    ╲          N      ┌──────────────┐
       ╱ D ≤ Sn-1 ╲──────────→│  Recharger   │
       ╲          ╱           └──────────────┘
    84～ ╲        ╱
         ╲      ╱
          ╲  ╱
           O│
            ▼
┌─────────────────────────┐
│   Calculer              │
│   Sn = Sn-1 - D         │ ～86
└─────────────────────────┘
            │
            ▼
┌─────────────────────────┐
│   Determiner            │
│   Adr (CRn)             │ ～88
└─────────────────────────┘
            │
            ▼
┌─────────────────────────┐
│  Ecrire "1" 2ème Lig.   │
│     à Adr (CR-1)        │ ～90
└─────────────────────────┘
            │
            ▼
┌─────────────────────────┐
│  Ecrire "1" 1ère Lig.   │
│     à Adr (CRn)         │ ～92
└─────────────────────────┘
```

Rechargement d'une valeur R

```
┌─────────────────────────┐
│     Lire Adr (CRn-1)     │──── 100
└─────────────────────────┘
             │
             ▼
┌─────────────────────────┐
│   Compter  Nb  C(0,0)    │
│  a droite  de   CRn-1    │──── 102
│        = S n-1           │
└─────────────────────────┘
             │
             ▼
┌─────────────────────────┐
│   Compter Nb total C(0,0)│──── 104
│        = N T n-1         │
└─────────────────────────┘
             │
             ▼
┌─────────────────────────┐
│   Calculer               │──── 106
│      Sn = S n-1 + R      │
└─────────────────────────┘
             │
             ▼
          ╱─────╲                        ┌──────────────────────┐
         ╱        ╲        N             │                      │
        ╱  Sn ≤ NTn-1 ╲───────────────▶ │  Changer " Région "  │
        ╲            ╱                    │                      │
         ╲        ╱                       └──────────────────────┘
  108 ──── ╲─────╱
             │ O
             ▼
┌─────────────────────────┐
│  Ecrire   " 1 " 2ème Lig │──── 110
│     à   Adr (CRn-1 )     │
└─────────────────────────┘
             │
             ▼
┌─────────────────────────┐
│   Déterminer             │──── 112
│        Adr (CR n)        │
└─────────────────────────┘
             │
             ▼
┌─────────────────────────┐
│  Ecrire    " 1 " 1er Lig │──── 114
│     à   Adr (CRn)        │
└─────────────────────────┘
```

$$FIG.4$$

Enregistrement d'une dépense
(D)

FIG.3

```
┌─────────────────────────┐
│  Lire Adr (CRn-1)        │──80
└─────────────────────────┘
            │
            ▼
┌─────────────────────────┐
│    Compter  Nb(0,0)      │
│  a droite  de CR n-1     │──82
│        =Sn-1             │
└─────────────────────────┘
            │
            ▼
         ◇◇◇◇◇
      ◇           ◇
   ◇                 ◇   N
  ◇   D ≤  Sn-1       ◇──────► ┌──────────────┐
   ◇                 ◇         │  Recharger   │
      ◇           ◇            └──────────────┘
    84    ◇◇◇◇◇
            │ O
            ▼
┌─────────────────────────┐
│  Calculer                │
│  Sn = Sn-1 - D           │──86
└─────────────────────────┘
            │
            ▼
┌─────────────────────────┐
│  Determiner              │
│  Adr(CR n)               │──88
└─────────────────────────┘
            │
            ▼
┌─────────────────────────┐
│  Ecrire "1" 2ème Lig.    │
│  à Adr (CR-1)            │──90
└─────────────────────────┘
            │
            ▼
┌─────────────────────────┐
│  Ecrire"1" 1ère Lig.     │
│  à Adr (CR n)            │──92
└─────────────────────────┘
```

# FIG. 6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X,D | FR-A-2 591 007 (REMERY) <br> * En entier * | 1,2,5-8 | G 07 F 7/02 <br> G 07 F 7/08 |
| A,D | | 3,4 | |
| A | US-A-4 204 113 (GIRAUD et al.) <br> * Résumé; figures 1,2,9; colonne 1, ligne 58 - colonne 2, ligne 29; colonne 3, lignes 46-65; colonne 5, ligne 66 - colonne 7, ligne 35; revendications 1-16 * | 1-8 | |
| A | FR-A-2 503 423 (FLONIC SA) <br> * Page 3, ligne 24 - page 4, ligne 20; page 5, ligne 15 - page 8, ligne 18; figures 1,2; revendications 1-8 * | 1-8 | |

DOMAINES TECHNIQUES
RECHERCHES (Int. Cl.4)

G 07 F
G 06 K

Le présent rapport a été établi pour toutes les revendications

| Lieu de la recherche | Date d'achèvement de la recherche | Examinateur |
|---|---|---|
| LA HAYE | 05-01-1989 | GUIVOL,O. |

EPO FORM 1503 03.82 (P0402)